# EUROPÄISCHE PATENTSCHRIFT

(11) **EP 3 765 311 B1**
(45) Veröffentlichungstag und Bekanntmachung des Hinweises auf die Patenterteilung: **24.11.2021**
(21) Anmeldenummer: 19705284.8
(22) Anmeldetag: 10.01.2019
(51) Int. Cl.: B60C 11/03, B60C 11/13

(54) **FAHRZEUGLUFTREIFEN**
PNEUMATIC VEHICLE TIRE
PNEUMATIQUE DE VÉHICULE

(30) Priorität: 15.03.2018 DE 102018203963
(43) Veröffentlichungstag der Anmeldung: 20.01.2021
(73) Patentinhaber: Continental Reifen Deutschland GmbH, 30165 Hannover (DE)
(72) Erfinder: ÖZÜDURU, Ahmet, 30419 Hannover (DE); SCHÜTTE, Ralf, 30419 Hannover (DE); ROEGER, Bernhard, 30419 Hannover (DE)
(74) Vertreter: Continental Corporation
(86) Internationale Anmeldenummer: PCT/EP2019/050514
(87) Internationale Veröffentlichungsnummer: WO 2019/174794

(56) Entgegenhaltungen:
- EP-A2- 2 489 526
- DE-A1-102016 213 334
- JP-A- H02 169 306
- JP-A- 2006 232 012
- JP-A- 2015 221 650

## Beschreibung

Die Erfindung betrifft einen Fahrzeugluftreifen mit einem Laufstreifen mit Umfangsrillen und zumindest einer in Umfangsrichtung umlaufenden Profilrippe, in welcher zur axialen Richtung unter einem Winkel von 45° ± 20° verlaufende Rillen ausgebildet sind, die an einer Rillenflanke einer die Profilrippe begrenzenden Umfangsrille in diese einmünden und innerhalb der Profilrippe enden, wobei die Rillenflanken der Umfangsrille unter Verbreiterung der Umfangsrille Richtung Laufstreifenperipherie unter einem Winkel von 12° bis 17° zur radialen Richtung verlaufen.

Ein derartiger Fahrzeugluftreifen ist beispielsweise aus der JP 2015 221 650 A bekannt. Der Reifen weist einen Laufstreifen mit einer zentralen Profilrippe auf, welche an jeder Seite von einer Umfangsrille begrenzt ist. Die zentrale Profilrippe ist mittig mit einer in Draufsicht zick-zack-förmig verlaufenden, schmalen Umfangsnut sowie mit zur axialen Richtung unter einem Winkel von 20° bis 40° verlaufenden ersten und zweiten Rillen versehen. Die ersten Rillen verlaufen zwischen einer der Umfangsrillen und der schmalen Umfangsnut. Die zweiten Rillen münden in die schmale Umfangsnut ein und enden innerhalb der Profilrippe. Der Reifen soll eine gute Schnee- und Eisperformance aufweisen.

Aus der EP 2 489 526 A2 ist ein Fahrzeugluftreifen mit einem Laufstreifen mit einer Profilblockreihe mit durchquerenden Querrillen bekannt. Die Querrillen setzen sich, in Draufsicht betrachtet, jeweils aus einem ersten und einem zweiten Rillenabschnitt zusammen. Der erste Rillenabschnitt weist eine konstante Breite und eine konstante Tiefe auf. Der zweite Rillenabschnitt weist eine Breite und eine Tiefe auf, welche jeweils ausgehend vom ersten Rillenabschnitt zur Umfangsrille zunehmen. Solche Querrillen tragen zur Verbesserung der Aquaplaningeigenschaften bei, wobei eine gute Trockenperformance aufrecht erhalten bleibt.

Weitere Fahrzeugluftreifen mit Laufstreifen mit Profilrippen, in welchen einseitig innerhalb der Profilrippe endende Rillen verlaufen, sind beispielsweise aus der DE 10 2016 213 334 A1, der JP H02 169 306 A und der JP 2006 232 012 A bekannt.

Aus der EP 2 239 153 A1 ist ein Fahrzeugluftreifen mit einem Laufstreifen bekannt, welcher eine Anzahl von durch Umfangsrillen voneinander getrennten Profilrippen aufweist. Schulterseitig sind Profilrippen vorgesehen, die von Querrillen durchquert sind, die mit einem kurzen, eine verringerte Tiefe aufweisenden Abschnitt in die die Profilrippe laufstreifeninnenseitig begrenzende Umfangsrille einmünden, um der Profilrippe eine bessere Stabilität zu verleihen. Einen ähnlich gestalteten Laufstreifen weist der aus der EP 3 037 282 A1 bekannte Fahrzeugluftreifen auf.

Aus der DE 10 2015 202 613 A1 ist ein Fahrzeugluftreifen mit einem Laufstreifen bekannt, bei welchem die schulterseitigen Profilrippen einschnittartig ausgebildete Querrillen aufweisen, welche in Bogenform Richtung Umfangsrille verlaufen und an der Laufstreifenperipherie durch eine Fase verbreitert sind, welche jeweils an der bogeninnenseitig verlaufenden Rillenflanke ausgebildet ist. Die einschnittartige, schmale Ausgestaltung der Querrillen sowie die Bogenform mit der Fase entlang der bogeninnenseitigen Querrillenkante sorgen für ein leises Abrollgeräusch und unterstützen das Ableiten von Wasser in die Umfangsrille auf nassem Untergrund.

Für das Fahrverhalten von Reifen ist es von Bedeutung, dass bestimmte Profilrippen, je nach Position im Laufstreifen, eine höhere Steifigkeit als andere Profilrippen aufweisen. Dies trifft beispielsweise auf die schulterseitig verlaufenden Profilrippen zu, die eine relativ hohe Steifigkeit aufweisen sollen, um einen guten Seitenkraftaufbau sicherzustellen. Um die Steifigkeit einer Profilrippe höher zu halten, wird der Negativanteil in dieser Profilrippe geringgehalten. Der geringe Negativanteil ist jedoch nachteilig für die Wasserdrainage in Querrichtung des Laufstreifens. Schulterseitig angeordnete Profilrippen weisen daher zur Sicherstellung der Wasserableitung meist schmale Rillen oder Einschnitte auf, die in Querrichtung orientiert sind, wodurch jedoch die Steifigkeit der Profilrippen reduziert wird und auch Defizite beim Abrollgeräusch im 1.000 Hz-Bereich entstehen. Diesbezüglich spielt auch die Tiefe und die Breite der Einschnitte bzw. schmalen Rillen eine gewisse Rolle. Es ist üblich, dass in Profilrippen ein Kompromiss in der Ausgestaltung mit Einschnitten und/oder schmalen Rillen getroffen wird, sodass entweder die Steifigkeit und das Abrollgeräusch oder das Drainagevermögen auf dem erwünschten Niveau sind.

Der Erfindung liegt die Aufgabe zugrunde, einen Fahrzeugluftreifen der eingangs genannten Art derart zu verbessern, sodass der erwähnte Zielkonflikt zwischen Steifigkeit und Geräuschreduktion einerseits und dem Wasserdrainagevermögen andererseits wesentlich besser als bisher gelöst wird.

Gelöst wird die gestellte Aufgabe erfindungsgemäß dadurch, dass die Rillen eine maximale Tiefe von 3,5 mm aufweisen und jeweils in eine lokale, an der Rillenflanke ausgebildete, bis zur Laufstreifenperipherie reichende, entlang der Rillenflanke konkav gerundete Einbuchtung einmünden, welche einen insbesondere parallel zur Laufstreifenperipherie verlaufenden Boden aufweist, der sich in einem in radialer Richtung ermittelten Abstand von 0,5 mm bis 2,0 mm von der tiefsten Stelle des Rillengrundes der Umfangsrille befindet.

Die geringe Tiefe der Rillen ist besonders günstig für eine hohe Steifigkeit der Profilrippe. Nachdem die Rillen jeweils in eine gerundet gestaltete Einbuchtung, die an der Rillenflanke der Umfangsrille ausgebildet ist, einmünden, wird der Abflussweg in die Umfangsrille verkürzt, wodurch eine verbesserte und beschleunigte Wasserableitung aus den Rillen in die Umfangsrille stattfinden kann. Die runde Gestaltung der Einbuchtungen vermeidet dabei das Entstehen von ungünstigen Wasserwirbeln. Die geringe Tiefe der Rillen sowie deren relativ große Neigung zur axialen Richtung sorgt für eine weitgehend "geschlossene" Profilrippe, wodurch die Geräuschabstrahlung des Reifens nach außen im 1.000 Hz-Bereich reduziert ist.

Besonders vorteilhaft für ein möglichst ungehindertes Abfließen von Wasser aus den Rillen in die Umfangsrille sind Ausgestaltungen von Einbuchtungen, welche sich in Richtung zur Umfangsrille verbreitern. Bei einer bevorzugten Ausführungsform weisen daher die Einbuchtungen und ihr Boden, in Draufsicht auf den Laufstreifen, eine D-ähnliche Form auf. Besonders günstig ist auch eine Ausgestaltung, bei der die Einbuchtung und ihr Boden in Draufsicht auf den Laufstreifen eine kreissegmentähnliche Form aufweisen, wobei das Kreissegment höchstens ein Halbkreis ist.

Vorzugsweise weist die Einbuchtung eine zwischen dem Boden und der Laufstreifenperipherie verlaufende konkav gerundete Begrenzungswand auf, welche zur radialen Richtung unter einem Winkel von 2° bis 5° geneigt ist. Diese Neigung verleiht der Einbuchtung insgesamt eine einem Trichter ähnliche Form, die ebenfalls die Ableitung von Wasser aus den Rillen in die Umfangsrille unterstützt.

Die Einmündungsbereiche der Rillen liegen bevorzugt an den am Weitesten Rillenflanken innenseitigen Bereichen der Einbuchtungen, sodass die erwähnten vorteilhaften Effekte der Einbuchtungen auf die Wasserdrainage voll zur Geltung kommen können.

Die Einbuchtungen an den Rillenflanken sollen möglichst keine strukturellen Auswirkungen auf die Profilrippe, insbesondere auf deren Stabilität, besitzen. Vorzugsweise befindet sich daher die in axialer Richtung am weitesten in die Profilrippe hineinragende Stelle der Einbuchtung an der Laufstreifenperipherie an der Randkante der Rillenflanke oder gegenüber der Position der sonstigen Randkante der Rillenflanke in axialer Richtung um bis zu 2 mm innerhalb der Profilrippe.

Besonders ausgewogene Eigenschaften hinsichtlich Steifigkeit, Geräuschreduktion und Wasserdrainagevermögen der Rillen werden durch bevorzugte Ausgestaltungen der Rillen unterstützt. Diesbezüglich ist es beispielsweise besonders vorteilhaft, wenn die Rillen einen U-förmigen oder einen V-förmigen Querschnitt aufweisen, ferner, wenn die Rillen eine minimale Tiefe von 1,5 mm aufweisen und an der Laufstreifenperipherie eine größte Breite von 2,0 mm bis 5,0 mm besitzen. Besonders bevorzugt ist in diesem Zusammenhang auch eine Ausgestaltung, bei der die Rillen eine Breite und eine Tiefe aufweisen, die beginnend bei ihren Enden in der Profilrippe Richtung ihrer Einmündungsbereiche in den Einbuchtungen kontinuierlich größer werden.

Von Vorteil für eine weitere Verbesserung der Wasserableitung ist es ferner, wenn an das in der Profilrippe befindliche Ende der Rillen jeweils ein Einschnitt anschließt. Solche Einschnitte können beispielsweise in eine Umfangsrille einmünden, die die Profilrippe an ihrer zweiten Seite begrenzt oder sie können, wenn es sich bei der Profilrippe um eine schulterseitig verlaufende Profilrippe handelt, über die Bodenaufstandsfläche des Laufstreifens hinaus verlaufen.

Besonders bevorzugt ist die erfindungsgemäße Ausgestaltung in Profilrippen, die schulterseitig verlaufende Profilrippen sind, da solche Rippen eine besonders hohe Steifigkeit zur Sicherstellung eines guten Seitenkraftaufbaus bei Kurvenfahrt aufweisen sollen.

Weitere Merkmale, Vorteile und Einzelheiten der Erfindung werden nun anhand der Zeichnung, die ein Ausführungsbeispiel darstellt, näher beschrieben. Dabei zeigen
Fig. 1 eine Draufsicht auf einen Umfangsabschnitt im schulterseitigen Bereich eines Laufstreifens eines Fahrzeugluftreifens,
Fig. 2 eine Schnittdarstellung entlang der Linie II-II der Fig. 1 und
Fig. 3 eine Schnittdarstellung entlang der Linie III-III der Fig. 1.

Gemäß der Erfindung ausgeführte Fahrzeugluftreifen sind insbesondere Fahrzeugluftreifen radialer Bauart für Personenkraftwagen, Vans und Light-Trucks.

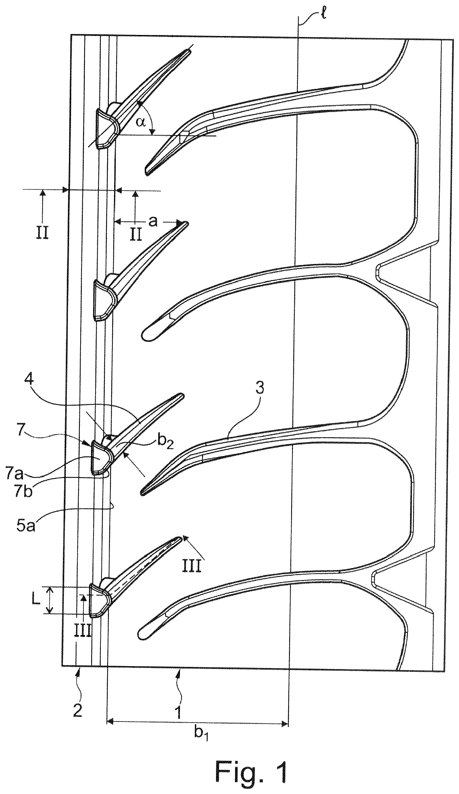

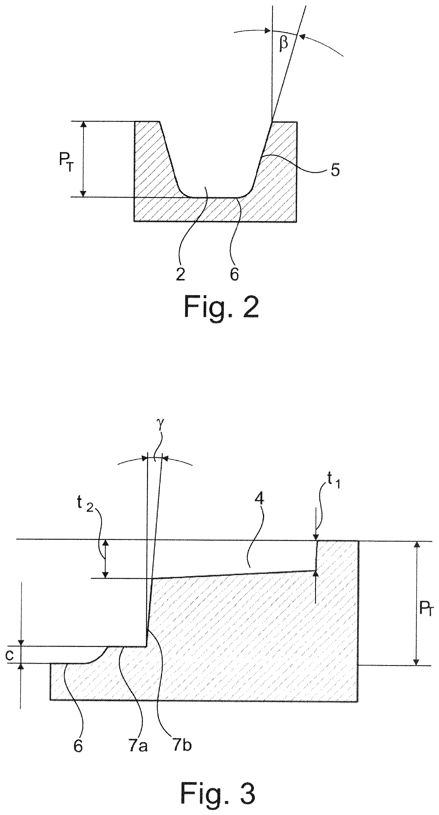

Fig. 1 zeigt eine Draufsicht - Abwicklung in der Ebene - eines schulterseitigen Bereiches eines Laufstreifens mit einer schulterseitigen Profilrippe 1 und einer diese laufstreifeninnenseitig begrenzenden Umfangsrille 2, welche, wie die Schnittdarstellung in Fig. 2 zeigt, eine Tiefe P_{T} aufweist, die der für den jeweiligen Reifen vorgesehenen Profiltiefe entspricht. Die gestrichelte Linie 1 in Fig. 1 versinnbildlicht den einen seitlichen Rand der Bodenaufstandsfläche des Reifens. Bei der gezeigten Ausführung verläuft die Umfangsrille 2 in Umfangsrichtung gerade, sie kann jedoch auch, wie es bei Umfangsrillen üblich ist, einen zickzack- oder wellenförmigen Verlauf aufweisen. Die laufstreifeninnenseitig an die Umfangsrille 2 anschließenden profilierten Laufstreifenbereiche sind nicht dargestellt und können weitere Profilrippen, Profilblockreihen, Umfangsrillen und dergleichen umfassen.

Im dargestellten Beispiel sind in der Profilrippe 1 Querrillen 3 ausgebildet, welche laufstreifeninnenseitig innerhalb der Profilrippe 1 in einem Abstand von insbesondere 3,0 mm bis 7,0 mm vor der Umfangsrille 2 enden, unter einem Winkel ≤ 45° zur axialen Richtung und ansonsten in bekannter Weise über die Bodenaufstandsfläche des Laufstreifens hinaus verlaufen. In Umfangsrichtung wechselt jeweils eine Querrille 3 mit einer in die Umfangsrille 2 einmündenden Rille 4 ab, welche innerhalb der Profilrippe 1 in einem Abstand a von der Umfangsrille 2, welcher 25 % bis 50 % der Breite b₁ der Profilrippe 1 entspricht, endet. Bei Umfangsrillen 2, die einen vom geraden Verlauf abweichenden, beispielsweise zickzack-förmigen, Verlauf aufweisen, ist b₁ die größte Breite der Profilrippe 1. Die Rillen 4 verlaufen relativ zur axialen Richtung unter einem Winkel a, welcher 45° +/- 20° beträgt, und weisen eine Neigung relativ zur axialen Richtung auf, welche mit jener der Querrillen 3 übereinstimmt. Die Rillen 4 verlaufen im Wesentlichen parallel zueinander, das heißt, dass innerhalb eines Laufstreifens die Winkel α um bis zu 10° voneinander abweichen können. Über ihre Erstreckung weist jede Rille 4 eine Tiefe auf, die beginnend bei ihrem geschlossenen Ende in Richtung Einmündungsbereich in die Umfangsrille 2 kontinuierlich größer wird, wobei die Rille 4 an ihrem Endbereich in der Profilrippe 1 eine Tiefe t₁ (Fig. 3) von mindestens 1,5 mm und an ihrem Einmündungsbereich in die Umfangsrille 2 eine Tiefe t₂ (Fig. 3) aufweist, die höchstens 3,5 mm beträgt und insbesondere um 10 % bis 20 % größer ist als die Tiefe t₁. Der Querschnitt der Rille 4 ist V-förmig oder U-förmig, ihre Breite b₂ nimmt, beginnend bei ihrem Ende in der Profilrippe 1, in Richtung Einmündungsbereich in die Umfangsrille 2 zu und beträgt beim Einmündungsbereich 2,5 mm bis 5,0 mm.

Wie die Schnittdarstellung in Fig. 2 zeigt, weist die Umfangsrille 2 außerhalb der Einmündungsbereiche von Rillen einen Querschnitt mit einem Rillengrund 6 und zwei Rillenflanken 5 auf, welche unter einem Winkel β von 12° bis 17°, insbesondere von 15°, zur radialen Richtung geneigt sind, wobei die Neigung derart ist, dass die Breite der Umfangsrille 2 in Richtung Laufstreifenperipherie größer wird. Über Ubergangsrundungen gehen die beiden Rillenflanken 5 in den Rillengrund 6 über. Der Rillengrund 6 und die Rillenflanken 5 verleihen der Umfangsrille 2 einen im Wesentlichen wannenförmigen Querschnitt.

Die Rillen 4 münden an lokalen Einbuchtungen 7 der einen Rillenflanke 5 in die Umfangsrille 2 ein. Jede Einbuchtung 7 weist in Draufsicht auf den Laufstreifen eine D-ähnliche Form auf, mit einem in Draufsicht D-ähnlichen Boden 7a und einer entlang der Rillenflanke 5 verlaufenden, insgesamt gerundeten Begrenzungswand 7b, die, wie es Fig. 3 zeigt, unter einem Winkel γ von 2° bis 5° zur radialen Richtung geneigt ist, sodass sich die Einbuchtung 7 in Richtung Laufstreifenperipherie etwas erweitert. Die Rillen 4 münden dabei in den am Weitestens rillenflankeninnenseitig befindlichen Bereichen der Einbuchtungen 7 ein.

Der Boden 7a jeder Einbuchtung 7 verläuft parallel zur Laufstreifenperipherie, ist gegenüber dem Rillengrund 6 im Niveau etwas angehoben und weist zur tiefsten Stelle des Rillengrundes 6 einen radialen Abstand c von 0,5 mm bis 2,0 mm auf. Der gerade verlaufende Rand des Bodens 7a erstreckt sich parallel zur Randkante der Umfangsrille an der Laufstreifenperipherie und weist eine Länge L von 3,0 mm bis 7,0 mm auf. An der Laufstreifenperipherie endet die Einbuchtung 7 an der Randkante 5a der Rillenflanke 5 oder ragt um bis zu 2,0 mm in die Profilrippe 1 hinein.

Die Einbuchtungen 7 können in Draufsicht auch eine andere gerundete Form aufweisen, beispielsweise die Form eines Kreissegmentes, höchstens eines Halbkreises.

Die Rillen 4 können entlang zumindest einer Kante, vorzugsweise entlang beider Kanten, an der Laufstreifenperipherie in bekannter Weise angefast sein. Unmittelbar an die Rillen 4 kann in der Profilrippe 1 jeweils ein schmaler, etwa 0,4 mm bis 1,0 mm breiter, nicht dargestellter Einschnitt anschließen, welcher vorzugsweise im Wesentlichen parallel zu den Querrillen 3 und über die Bodenaufstandsfläche und den Laufstreifenrand 1 hinaus verläuft.

Der Kantenbereich der Einbuchtung 7 an der Laufstreifenperipherie kann mit einem kleinen Radius gerundet oder mit einer Fase versehen sein.

Die Einbuchtungen 7 an der Rillenflanke 5 der Umfangsrille 2 verkürzen den Abflussweg für Wasser, sodass erfindungsgemäße Laufstreifen eine verbesserte Wasserdrainage aufweisen, wobei die runde Form der Einbuchtungen 7 die Drainagewirkung unterstützt. Durch die geringe Tiefe der Rillen 4 bleibt die schulterseitige Profilrippe 1 weitgehend "geschlossen", wodurch die Geräuschabstrahlung des Reifens im Reifen/Fahrbahngeräusch im Bereich um 1.000 Hz gering ist. Die Erstreckung der Rillen 4 relativ zur axialen Richtung unter einem Winkel von 45° +/- 20° trägt ebenfalls zu einer Reduktion der Geräuschabstrahlung nach außen bei.

### Bezugsziffernliste

- 1: Profilrippe
- 2: Umfangsrille
- 3: Querrille
- 4: Rille
- 5: Rillenflanke
- 6: Rillengrund
- 7: Einbuchtung
- 7a: Boden
- 7b: Begrenzungswand
- α, β, γ: Winkel
- a, c: Abstand
- b₁, b₂: Breite
- 1: Linie
- L: Länge
- P_{T}: Profiltiefe
- t₁, t₂: Tiefe

## Patentansprüche

1. Fahrzeugluftreifen mit einem Laufstreifen mit Umfangsrillen (2) und zumindest einer in Umfangsrichtung umlaufenden Profilrippe (1), in welcher zur axialen Richtung unter einem Winkel (α) von 45° ± 20° verlaufende Rillen (4) ausgebildet sind, die an einer Rillenflanke (5) einer die Profilrippe (1) begrenzenden Umfangsrille (2) in diese einmünden und innerhalb der Profilrippe (1) enden, wobei die Rillenflanken (5) der Umfangsrille (2) unter Verbreiterung der Umfangsrille (2) Richtung Laufstreifenperipherie unter einem Winkel (β) von 12° bis 17° zur radialen Richtung verlaufen,
**dadurch gekennzeichnet,**
**dass** die Rillen (4) eine maximale Tiefe (t₂) von 3,5 mm aufweisen und jeweils in eine lokale, an der Rillenflanke (5) ausgebildete, bis zur Laufstreifenperipherie reichende, entlang der Rillenflanke (5) konkav gerundete Einbuchtung (7) einmünden, welche einen insbesondere parallel zur Laufstreifenperipherie verlaufenden Boden (7a) aufweist, der sich in einem in radialer Richtung ermittelten Abstand (c) von 0,5 mm bis 2,0 mm von der tiefsten Stelle des Rillengrundes (6) der Umfangsrille (2) befindet.

2. Fahrzeugluftreifen nach Anspruch 1, **dadurch gekennzeichnet, dass** die Einbuchtung (7) und ihr Boden (7a) in Draufsicht auf den Laufstreifen eine D-ähnliche Form aufweisen.

3. Fahrzeugluftreifen nach Anspruch 1 oder 2, **dadurch gekennzeichnet, dass** die Einbuchtung (7) und ihr Boden (7a) in Draufsicht auf den Laufstreifen eine Kreissegment ähnliche Form aufweisen, wobei das Kreissegment höchstens ein Halbkreis ist.

4. Fahrzeugluftreifen nach einem der Ansprüche 1 bis 3, **dadurch gekennzeichnet, dass** die Einbuchtung (7) eine zwischen dem Boden (7a) und der Laufstreifenperipherie verlaufende konkav gerundete Begrenzungswand (7b) aufweist, welche zur radialen Richtung unter einem Winkel (γ) von 2° bis 5° geneigt ist.

5. Fahrzeugluftreifen nach einem der Ansprüche 1 bis 4, **dadurch gekennzeichnet, dass** die Rillen (4) an den am weitesten innenseitigen Bereichen der Einbuchtungen (7) einmünden.

6. Fahrzeugluftreifen nach einem der Ansprüche 1 bis 5, **dadurch gekennzeichnet, dass** sich die in axialer Richtung am weitesten in die Profilrippe (1) hineinragende Stelle der Einbuchtung (7) an der Laufstreifenperipherie an der Randkante (5a) der Rillenflanke (5) befindet.

7. Fahrzeugluftreifen nach einem der Ansprüche 1 bis 5, **dadurch gekennzeichnet, dass** die in axialer Richtung am weitesten in die Profilrippe (1) hineinragende Stelle der Einbuchtung (7), gegenüber der Position der Randkante (5a) der Rillenflanke (5) in axialer Richtung um bis zu 2,0 mm in die Profilrippe (1) hineinragt.

8. Fahrzeugluftreifen nach einem der Ansprüche 1 bis 7, **dadurch gekennzeichnet, dass** die Rillen (4) einen U-förmigen oder einen V-förmigen Querschnitt aufweisen.

9. Fahrzeugluftreifen nach einem der Ansprüche 1 bis 7, **dadurch gekennzeichnet, dass** die Rillen (4) eine minimale Tiefe (t₁) von 1,5 mm aufweisen.

10. Fahrzeugluftreifen nach einem der Ansprüche 1 bis 9, **dadurch gekennzeichnet, dass** die Rillen (4) an der Laufstreifenperipherie eine größte Breite (b₂) von 2,0 mm bis 5,0 mm aufweisen.

11. Fahrzeugluftreifen nach einem der Ansprüche 1 bis 10, **dadurch gekennzeichnet, dass** die Rillen (4) eine Breite und eine Tiefe aufweisen, die beginnend bei ihren Enden in der Profilrippe (1) und in Richtung ihrer Einmündungsbereiche in die Einbuchtungen (7) kontinuierlich größer werden.

12. Fahrzeugluftreifen nach einem der Ansprüche 1 bis 11, **dadurch gekennzeichnet, dass** an das in der Profilrippe (1) befindliche Ende der Rillen (4) jeweils ein Einschnitt anschließt.

13. Fahrzeugluftreifen nach einem der Ansprüche 1 bis 12, **dadurch gekennzeichnet, dass** die Profilrippe (1) eine schulterseitig verlaufende Profilrippe ist.

## Claims

1. Pneumatic vehicle tyre with a tread comprising circumferential grooves (2) and at least one profile rib (1), which runs around in a circumferential direction and formed in which there are grooves (4) which run at an angle (α) of 45° ± 20° with respect to the axial direction, open into a circumferential groove (2) at a groove flank (5) of said circumferential groove that delimits the profile rib (1) and end within the profile rib (1), wherein the groove flanks (5) of the circumferential groove (2) run at an angle (β) of 12° to 17° with respect to the radial direction, thereby widening the circumferential groove (2) in the direction of the periphery of the tread,
**characterized**
**in that** the grooves (4) have a maximum depth (t₂) of 3.5 mm and open in each case into a local indentation (7), which is formed at the groove flank (5), reaches up to the periphery of the tread, is concavely rounded along the groove flank (5) and has a bottom (7a) that runs in particular parallel to the periphery of the tread and that is at a distance (c), determined in the radial direction, of 0.5 mm to 2.0 mm from the deepest point of the groove base (6) of the circumferential groove (2).

2. Pneumatic vehicle tyre according to Claim 1, **characterized in that** the indentation (7) and the bottom (7a) thereof have a shape similar to a D in a plan view of the tread.

3. Pneumatic vehicle tyre according to Claim 1 or 2, **characterized in that** the indentation (7) and the bottom (7a) thereof have a shape similar to a circular segment in a plan view of the tread, wherein the circular segment is at most a semicircle.

4. Pneumatic vehicle tyre according to one of Claims 1 to 3, **characterized in that** the indentation (7) has a concavely rounded boundary wall (7b), which runs between the bottom (7a) and the periphery of the tread and is inclined at an angle (γ) of 2° to 5° with respect to the radial direction.

5. Pneumatic vehicle tyre according to one of Claims 1 to 4, **characterized in that** the grooves (4) open into those regions of the indentations (7) which are furthest towards the inside.

6. Pneumatic vehicle tyre according to one of Claims 1 to 5, **characterized in that**, at the periphery of the tread, that point of the indentation (7) which projects furthest into the profile rib (1) in the axial direction is situated at the peripheral edge (5a) of the groove flank (5).

7. Pneumatic vehicle tyre according to one of Claims 1 to 5, **characterized in that** that point of the indentation (7) which projects furthest into the profile rib (1) in the axial direction projects by up to 2.0 mm into the profile rib (1) in the axial direction relative to the position of the peripheral edge (5a) of the groove flank (5).

8. Pneumatic vehicle tyre according to one of Claims 1 to 7, **characterized in that** the grooves (4) have a U-shaped or V-shaped cross section.

9. Pneumatic vehicle tyre according to one of Claims 1 to 7, **characterized in that** the grooves (4) have a minimum depth (t₁) of 1.5 mm.

10. Pneumatic vehicle tyre according to one of Claims 1 to 9, **characterized in that** the grooves (4) have a maximum width (b₂) of 2.0 mm to 5.0 mm at the periphery of the tread.

11. Pneumatic vehicle tyre according to one of Claims 1 to 10, **characterized in that** the grooves (4) have a width and a depth which increase continuously, starting at their ends in the profile rib (1) and in the direction of their regions of entry into the indentations (7).

12. Pneumatic vehicle tyre according to one of Claims 1 to 11, **characterized in that** the end of the grooves (4) which is situated in the profile rib (1) is adjoined in each case by a sipe.

13. Pneumatic vehicle tyre according to one of Claims 1 to 12, **characterized in that** the profile rib (1) is a profile rib running on the shoulder side.

## Revendications

1. Pneumatique de véhicule, comprenant une bande de roulement dotée de rainures circonférentielles (2) et d'au moins une nervure profilée (1) s'étendant dans la direction circonférentielle et dans laquelle sont réalisées des rainures (4) s'étendant selon un angle (α) de 45° ±20° par rapport à la direction axiale qui débouchent sur une rainure circonférentielle (2) délimitant la nervure profilée (1) au niveau d'un flanc de rainure (5) de cette rainure et se terminent à l'intérieur de la nervure profilée (1), les flancs de rainure (5) de la rainure circonférentielle (2) s'étendant selon un angle (β) de 12° à 17° par rapport à la direction radiale en élargissant la rainure circonférentielle (2) en direction de la périphérie de bande de roulement,
**caractérisé en ce que** les rainures (4) présentent une profondeur maximale (t₂) de 3,5 mm, et débouchent respectivement sur une encoche locale (7) arrondie de façon concave le long du flanc de rainure (5), réalisée sur le flanc de rainure (5) et allant jusqu'à la périphérie de bande de roulement, ladite encoche présentant un fond (7a) s'étendant en particulier en parallèle à la périphérie de bande de roulement et qui se trouve à une distance (c), déterminée dans la direction radiale, de 0,5 mm à 2,0 mm de l'endroit le plus bas du fond de rainure (6) de la rainure circonférentielle (2).

2. Pneumatique de véhicule selon la revendication 1, **caractérisé en ce qu'**en vue de dessus, l'encoche (7) et son fond (7a) présentent une forme similaire à une lettre D sur la bande de roulement.

3. Pneumatique de véhicule selon la revendication 1 ou 2, **caractérisé en ce qu'**en vue de dessus, l'encoche (7) et son fond (7a) présentent sur la bande de roulement une forme similaire à un segment de cercle, le segment de cercle étant au maximum un demi-cercle.

4. Pneumatique de véhicule selon l'une quelconque des revendications 1 à 3, **caractérisé en ce que** l'encoche (7) présente une paroi de délimitation (7b) arrondie de façon concave, s'étendant entre le fond (7a) et la périphérie de bande de roulement et qui est inclinée selon un angle (γ) de 2° à 5° par rapport à la direction radiale.

5. Pneumatique de véhicule selon l'une quelconque des revendications 1 à 4, **caractérisé en ce que** les rainures (4) débouchent sur les zones les plus à l'intérieur des encoches (7).

6. Pneumatique de véhicule selon l'une quelconque des revendications 1 à 5, **caractérisé en ce que** l'endroit de l'encoche (7) faisant saillie le plus loin dans la nervure profilée (1) dans la direction axiale se trouve sur la périphérie de bande de roulement au bord marginal (5a) du flanc de rainure (5).

7. Pneumatique de véhicule selon l'une quelconque des revendications 1 à 5, **caractérisé en ce que** l'endroit de l'encoche (7) faisant saillie le plus loin dans la nervure profilée (1) dans la direction axiale fait saillie sur jusqu'à 2,0 mm dans la nervure profilée (1) à l'opposé de la position du bord marginal (5a) du flanc de rainure (5) dans la direction axiale.

8. Pneumatique de véhicule selon l'une quelconque des revendications 1 à 7, **caractérisé en ce que** les rainures (4) présentent une section transversale en forme de U ou en forme de V.

9. Pneumatique de véhicule selon l'une quelconque des revendications 1 à 7, **caractérisé en ce que** les rainures (4) présentent une profondeur minimale (t₁) de 1,5 mm.

10. Pneumatique de véhicule selon l'une quelconque des revendications 1 à 9, **caractérisé en ce que** les rainures (4) présentent sur la périphérie de bande de roulement une largeur la plus grande (b₂) de 2,0 mm à 5,0 mm.

11. Pneumatique de véhicule selon l'une quelconque des revendications 1 à 10, **caractérisé en ce que** les rainures (4) présentent une largeur et une profondeur qui augmentent en continu en commençant à leurs extrémités dans la nervure profilée (1) et en direction de leurs zones de débouché sur les encoches (7).

12. Pneumatique de véhicule selon l'une quelconque des revendications 1 à 11, **caractérisé en ce que** l'extrémité des rainures (4) se trouvant dans la nervure profilée (1) est suivie d'une entaille respectivement.

13. Pneumatique de véhicule selon l'une quelconque des revendications 1 à 12, **caractérisé en ce que** la nervure profilée (1) est une nervure profilée s'étendant côté épaule.
